# EUROPEAN PATENT SPECIFICATION

(11) **EP 2 737 712 B1**
(45) Date of publication and mention of the grant of the patent: **19.06.2019**
(21) Application number: 12820140.7
(22) Date of filing: 09.01.2012
(51) Int. Cl.: H04N 21/236, H04N 21/4722, H04N 21/61, H04N 21/81, H04N 21/414

(54) **METHOD AND APPARATUS FOR PROVIDING INFORMATION**
VERFAHREN UND VORRICHTUNG ZUR BEREITSTELLUNG VON INFORMATIONEN
PROCÉDÉ ET APPAREIL DE FOURNITURE D'INFORMATIONS

(30) Priority: 29.07.2011 KR 20110076146
(43) Date of publication of application: 04.06.2014
(73) Proprietor: Samsung Electronics Co., Ltd., Suwon-si, Gyeonggi-do 443-742 (KR)
(72) Inventor: JEON, Hee-chul, Suwon-si Gyeonggi-do 443-370 (KR); PARK, Yong-gook, Yongin-si Gyeonggi-do 446-581 (KR); KANG, Tae-young, Seoul 140-889 (KR)
(74) Representative: HGF Limited
(86) International application number: PCT/KR2012/000211
(87) International publication number: WO 2013/018963

(56) References cited:
- WO-A1-2010/105192
- JP-A- 2009 245 313
- KR-A- 20080 068 587
- KR-A- 20110 032 026
- US-A1- 2008 056 216
- US-A1- 2008 244 676
- US-A1- 2009 055 742
- US-A1- 2009 216 745

## Description

### Technical Field

The present invention relates generally to a method and apparatus for providing information, and more particularly, to a method and apparatus for providing information by inserting information related to content into identification information of a wireless transceiver.

### Background Art

When users need detailed information about content, e.g., an advertisement displayed on a television or a Large Format Display (LFD), the users must obtain the detailed information by separately searching for necessary information through a computer or a portable internet terminal.

Various techniques are used to provide information regarding content. In US2008/0244676, program information is either broadcast with the content or unicast to a requesting user device. In US2009/0216745, another unicast technique is described.

It is also known for an access point to have an associated identifier such as an SSID. US2008/0056216 describes a first device communicating the identifier of one such access point to another (wireless) device so that the other device may identify the access point as a potential network device. Furthermore, WO2010/105192 describes the insertion of information capable of directing a wireless terminal to a server of a network into the SSID.

### Disclosure of Invention

### Solution to Problem

The present invention has been made to address at least the above problems and/or disadvantages and to provide at least the advantages described below. According to an aspect of the present invention, a method of providing information and an information providing apparatus using the method, whereby detailed information of content that is displayed on a display device is immediately checked in a terminal without having to directly input the detailed information are provided.

### Brief Description of Drawings

The above and other features and advantages of the present invention will become more apparent by describing in detail exemplary embodiments thereof with reference to the attached drawings in which:
FIG. 1 is a diagram illustrating a location-based service providing system;
FIG. 2 is a flowchart illustrating a method of providing information, according to an embodiment of the present invention;
FIGS. 3a and 3b are diagrams illustrating an example of a structure of tag information to be inserted into a Service Set IDentifier (SSID) according to an embodiment of the present invention;
FIG. 4 is a diagram illustrating an example of an Electronic Program Guide (EPG), according to an embodiment of the present invention;
FIGS. 5a and 5b are diagrams illustrating an example of content and tags in which content-related information is determined, according to an embodiment of the present invention;
FIG. 6 is a diagram illustrating an example of tag information inserted into IDentification (ID) information other than an SSID according to an embodiment of the present invention;
FIG. 7 is a diagram illustrating a scenario of a method of providing information, according to an embodiment of the present invention;
FIG. 8 is a flowchart illustrating a method of providing information, according to an arrangement that does not constitute an embodiment of the present invention;
FIG. 9 is a flowchart illustrating a method of providing information performed by a wireless transceiver that exists outside an information providing apparatus, according to an arrangement that does not constitute an embodiment of the present invention;
FIG. 10 is a diagram illustrating a scenario according to a method of providing information, according to an arrangement that does not constitute an embodiment of the present invention;
FIG. 11 is a flowchart illustrating a method of providing information, according to another embodiment of the present invention;
FIG. 12 is a block diagram illustrating an information providing apparatus, according to an embodiment of the present invention; and
FIG. 13 is a block diagram illustrating an information providing apparatus, according to another an arrangement that does not constitute an of the present invention.

### Best Mode for Carrying out the Invention

According to an aspect of the present invention, a method of providing information according to claim 1 is provided.

According to an example not constituting an embodiment of the present invention, a method of providing information is provided. The method includes determining content-related information corresponding to playable content; and transmitting the determined content-related information to a connected wireless transceiver that is externally located, wherein the transmitted content-related information is inserted into IDentification (ID) information of the connected wireless transceiver.

According to an aspect of the present disclosure, a method of providing information is provided. The method includes receiving content-related information from an external source; inserting the content-related information into IDentification (ID) information of the wireless transceiver; and transmitting, after the insertion of the content-related information, the ID information to the external source.

According to another example not constituting an embodiment of the present invention, a method of providing information is provided. The method includes receiving IDentification (ID) information of a wireless transceiver from an external source, wherein the ID information contains content-related information corresponding to content that is playable by an external device; and extracting the content-related information from the ID information and displaying the extracted content-related information.

According to another aspect of the present invention, an information providing apparatus according to claim 8 is provided.

According to another example not constituting an embodiment of the present invention, an information providing apparatus is provided. The apparatus includes a control unit for determining content-related information corresponding to playable content; a wireless transceiver for inserting the content-related information into identification (ID) information; and a communication unit for transmitting the ID information to an external source after insertion of the content-related information.

According to another example not constituting an embodiment of the present invention, an information providing apparatus is provided. The apparatus includes a control unit for determining content-related information related to playable content; and a communication unit for transmitting the content-related information to a connected wireless transceiver that is externally located, wherein the control unit inserts the content-related information into identification (ID) information of the connected wireless transceiver.

According to another example not constituting an embodiment of the present invention, a wireless transceiver is provided. The wireless transceiver includes a control unit for inserting content-related information into IDentification (ID) information of the wireless transceiver when the content-related information is received from an external source; and a communication unit for receiving the content-related information and transmitting the ID information to the external source after the content-related information is inserted.

According to another example not constituting an embodiment of the present invention, an information providing apparatus is provided. The apparatus includes a communication unit for receiving IDentification (ID) information of a wireless transceiver from an external source, wherein the ID information contains content-related information related to content playable by an external device; a control unit for extracting the content-related information from the ID information; and a display unit for displaying the content-related information.

According to another example not constituting an embodiment of the present invention, a computer-readable recording medium having recorded thereon a program for executing a method of providing information is provided. The method includes determining content-related information corresponding to playable content; inserting the content-related information into IDentification (ID) information of a wireless transceiver; and transmitting, after insertion of the content-related information, the ID information to an external source.

According to another example not constituting an embodiment of the present invention, a computer-readable recording medium having recorded thereon a program for executing a method of providing information is provided. The method includes determining content-related information corresponding to playable content; transmitting the content-related information to a connected wireless transceiver that is externally located; and inserting the content-related information into IDentification (ID) information of the connected wireless transceiver.

According to another example not constituting an embodiment of the present invention, a computer-readable recording medium having recorded thereon a program for executing a method of providing information, the method performed by a wireless transceiver is provided. The method includes receiving content-related information from an external source; inserting the content-related information into IDentification (ID) information of the wireless transceiver; and transmitting, after inserting the content-related information, the ID information to the external source.

According to another example not constituting an embodiment of the present invention, a computer-readable recording medium having recorded thereon a program for executing a method of providing information is provided. The method includes receiving IDentification (ID) information of a wireless transceiver from an external source, wherein the ID information contains content-related information related to content that can be played by an external device; and extracting the content-related information from the ID information and displaying the content-related information.

### Mode for the Invention

Hereinafter, embodiments of the present invention are described in detail with reference to the attached drawings. As used herein, the term "and/or" includes any and all combinations of one or more of the associated listed items. The same or similar components may be designated by the same or similar reference numerals although they are illustrated in different drawings. Detailed descriptions of constructions or processes known in the art may be omitted to avoid obscuring the subject matter of the present invention.

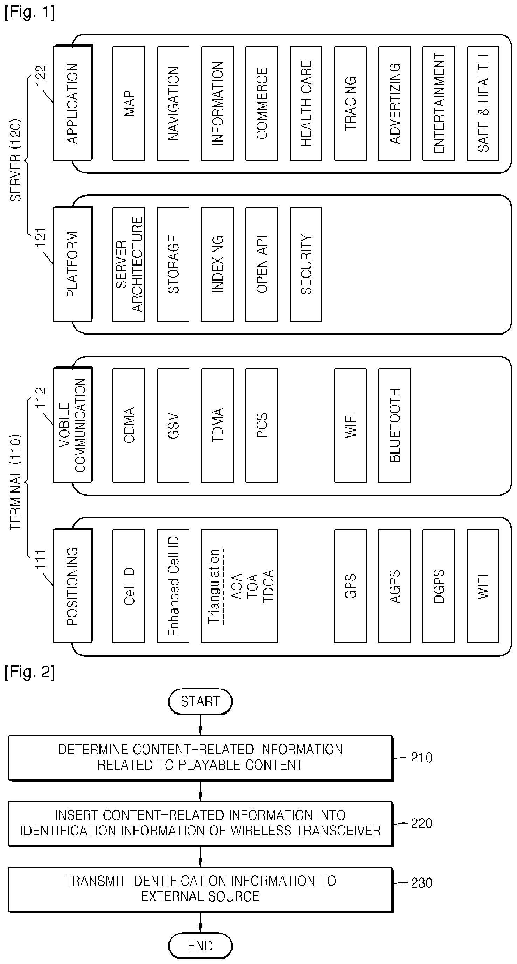

FIG. 1 is a diagram illustrating a location-based service providing system.

Referring to FIG. 1, a location-based service providing system may include a terminal 110 and a server 120. The terminal 110 includes a positioning module 111 and a mobile communication module 112. The server 120 includes a platform 121 and an application 122.

The positioning module 111 performs a location check of the terminal 110, and uses technologies including cell IDentification (ID) positioning technology, enhanced cell ID positioning technology, triangulation technology such as Angle of Arrival (AoA) technology, Time of Arrival (ToA) technology, or Time Difference of Arrival (TDoA) technology, a Global Positioning System (GPS), an Assisted GPS (AGPS), a Differential GPS (DGPS), Wireless Fidelity (WiFi) technology, etc. However, embodiments of the present invention are not limited to the aforementioned technologies.

The mobile communication module 112 allows communication between the terminal 110 and the server 120. Examples of such technology related to the mobile communication module 112 include Code Division Multiple Access (CDMA) technology, Global System for Mobile communications (GSM) technology, Time Division Multiple Access (TDMA) technology, Personal Communication Service (PCS) technology, etc., and examples of technology related to short-distance communication include WiFi technology, BLUETOOTH® technology, etc. However, embodiments of the present invention are not limited to the aforementioned technologies.

The platform 121 may include technologies such as server architecture technology, storage technology, indexing technology, open-Application Programming Interface (open-API) technology, security technology, etc. The server architecture technology is a location-based technology for responding to a location information request of the terminal 110 by obtaining a location from a location obtaining server, and performing location information management, a location information processing operation with respect to a person or a group, a movement route tracing operation, etc. The storage technology involves storing and managing a large amount of information. The indexing technology involves indexing location information or information related to the location information into optimized forms, and configuring the optimized forms so as to allow the optimized forms to be easily searched for. The open-API technology involves performing connections with respect to provision of location information and related information of another service provider. The security technology involves controlling access to user-profile management, authentication, security, etc. with respect to various users. However, embodiments of the present invention are not limited to the aforementioned technologies.

The application 122 provides a location-based service to the terminal 110. Examples of the application 122 include a map application, a navigation application, an information application, a commercial application, a health care application, a tracing application, an advertising application, an entertainment application, a health and safety application, etc. However, embodiments of the present invention are not limited to the aforementioned examples. Hereinafter, embodiments of the present invention are described with reference to commercial applications, but other applications may be utilized in accordance with embodiments of the present invention.

FIG. 2 is a flowchart illustrating a method of providing information, according to an embodiment of the present invention.

Referring to FIG. 2, in step 210, an information providing apparatus determines information related to playable content. Herein, "content-related information" refers information related to details of the content that is separate from the content itself. For example, the content-related information may be information about one or more characters in the content that is being played. According to embodiments of the present invention, the content-related information may be formed as tag information, and the tag information may be formed of a string or a byte-code. Further detailed descriptions with respect to a structure of the tag information are provided herein below.

The information providing apparatus determines the content-related information according to playback time information of the content. More specifically, the information providing apparatus analyzes whether the content-related information is related to a specific playback time (e.g., an elapsed time of 30 minutes after playback of the content has started) of the content, and if related, the information providing apparatus determines that the content-related information corresponds to a content playback time, and matches the content-related information with the content. According to embodiments of the present invention, the content may indicate content that is being played. Also, according to embodiments of the present invention, if a plurality of pieces of the content-related information exist, the plurality of pieces of the content-related information may be determined according to a priority order set by a user of the information providing apparatus.

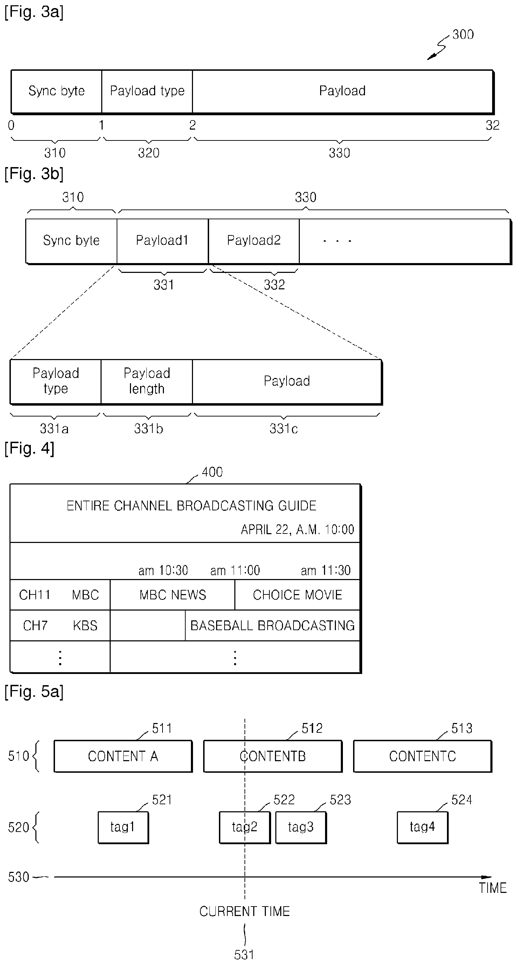

FIG. 4 is a diagram illustrating an example of an Electronic Program Guide (EPG), according to an embodiment of the present invention.

Referring to FIG. 4, an EPG 400 includes information regarding broadcasting programs for certain broadcasting times of each channel.

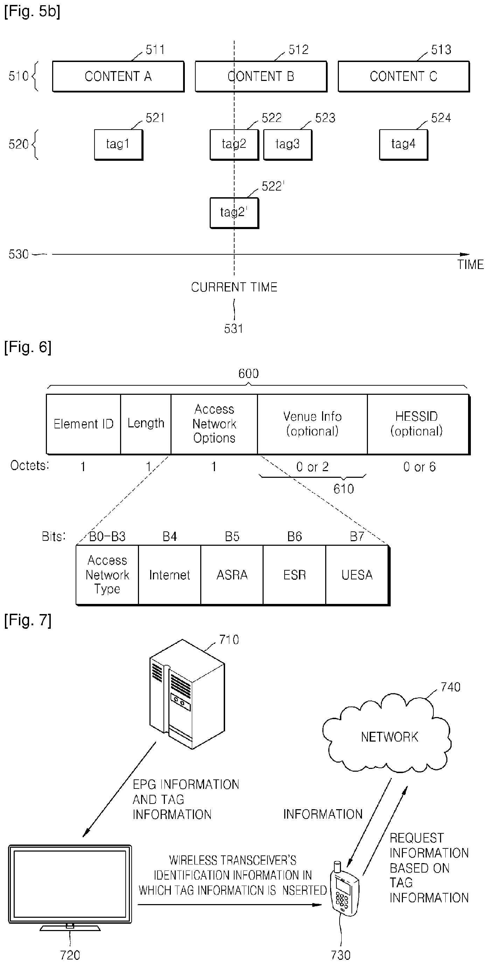

FIGS. 5a and 5b are diagrams illustrating an example of content and tags in which content-related information is determined, according to an embodiment of the present invention.

Referring to FIG. 5a, a plurality of pieces of content 510 including content A 511, content B 512, and content C 513 to be played according to a time flow 530, and a plurality of pieces of tag information 520 including tag1 information 521, tag2 information 522, tag3 information 523, and tag4 information 524 are illustrated, wherein the plurality of pieces of tag information 520 are plurality of pieces of content-related information that are classified according to a playback time of each content. The information providing apparatus determines the tag2 information 522 related to the content B 512 corresponding to a current time 531.

Referring to FIG. 5b, tag information related to the content B 512 corresponding to the current time 531 includes the tag2 information 522 and tag2' information 522', and in this regard, the information providing apparatus may determine both the tag2 information 522 and the tag2' information 522', may determine one information from among the tag2 information 522 and the tag2' information 522' according to a user preference, or may sequentially determine both the tag2 information 522 and the tag2' information 522' according to a priority order.

The content-related information may be received from an external server or generated by the information providing apparatus. When the information providing apparatus generates the content-related information, the information providing apparatus receives EPG information about broadcasting programs from the external server. The EPG information includes information obtained by classifying a plurality of pieces of contents related to details of the broadcasting programs according to a broadcasting time schedule. The EPG information is initially stored in the information providing apparatus. After the EPG information is stored, the information providing apparatus extracts the information about the contents from the EPG information, wherein the information is obtained by classifying the plurality of pieces of contents related to the details of the broadcasting programs according to the broadcasting time schedule, and the information providing apparatus generates the content-related information based on the extracted information.

Referring back to FIG. 2, in step 220, the information providing apparatus inserts the determined content-related information into ID information of a wireless transceiver. In the method of FIG. 2, the wireless transceiver may be included in the information providing apparatus. The information providing apparatus may directly insert the determined content-related information into the ID information of the wireless transceiver, or the wireless transceiver may insert the determined content-related information into the ID information. According to embodiments of the present invention, the wireless transceiver may be an Access Point (AP), and the ID information may be a Service Set IDentifier (SSID). However, other such transceivers and/or IDs may be used in accordance with embodiments of the present invention.

FIGS. 3a and 3b are diagrams illustrating an example of a structure of tag information to be inserted into an SSID according to an embodiment of the present invention.

Referring to FIG. 3a, an SSID 300 may be formed according to the American Standard Code for Information Interchange (ASCII) codes of a maximum of 32 bytes, so that the tag information 300 to be inserted into the SSID may have a size of the maximum of 32 bytes. A Sync byte field 310 having a size of 1 byte includes information related to an AP, a payload type field 320 indicates a type of a payload field 330, and the payload field 330 indicates information relate to content. If a plurality of payload types are not required, the Sync byte field 310 and the payload type field 320 may be omitted. However, if the Sync byte field 310 exists, a single byte following the Sync byte field 310 may be the payload type field 320. Based upon information in the payload type field 320, a terminal may perform different processing operations.

FIG. 3b illustrates a case in which a plurality of pieces of tag information exist, and in this regard, a plurality of sub-payload fields 331, 332, etc. may exist in the payload field 330, and each of the sub-payload fields 331, 332, etc, may include a payload type field 331a, a payload length field 331b, and a payload field 331c. One of the sub-payload fields 331, 332, etc. may include descriptions regarding the rest of the sub-payload fields 331, 332, etc., or each of the sub-payload fields 331, 332, etc. may have a title attribute to be displayed to a user. However, embodiments of the present invention are not limited to the structure of tag information 300 shown in FIGS. 3a and 3b.

FIG. 6 illustrates an example in which tag information is inserted into ID information other than the SSID according to an embodiment of the present invention.

Referring to FIG. 6, the tag information may be inserted by using a Venue Info field 610 in an Access Network Query Protocol (ANQP) field 600 according to the Institute of Electrical and Electronics Engineers (IEEE) 802.11u standard, and then may be delivered to a terminal.

Referring back to FIG. 2, in step 230, the information providing apparatus transmits the ID information to an external device.

FIG. 7 is a diagram illustrating a scenario according to a method of providing information, according to the embodiment of the present invention.

Referring to FIG. 7, a server 710 transmits the EPG information and/or the tag information to a display 720 (e.g., a digital television) having the information providing apparatus and the wireless transceiver mounted therein, wherein the tag information is obtained by classifying a plurality of pieces of contents related to details of broadcasting programs according to a broadcasting time schedule. If the display 720 receives only the EPG information (i.e., tag information is not transmitted in a form already separated from the EPG information), the display 720 extracts tag information from the EPG information. The display 720 inserts the tag information into ID information of the wireless transceiver, and transmits the ID information to a user terminal 730. The user terminal 730 may extract the tag information from the ID information and may display the tag information, or may request a network 740 for information based on the tag information and may receive requested information from the network 740. Detailed operations performed by the user terminal 730 are described in detail herein below.

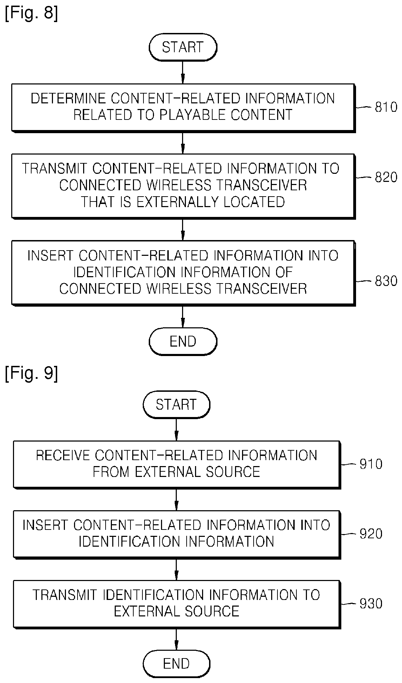

FIG. 8 is a flowchart illustrating a method of providing information, according to an arrangement that does not constitute an embodiment of the present invention.

In contrast to the method according to FIG. 2, the method according to FIG. 8 is related to the method of providing information when a wireless transceiver exists outside an information providing apparatus. Referring to FIG. 8, step 810 is the same as operation 210 of FIG. 2, and thus a further description thereof is omitted for clarity and conciseness.

In step 820, the information providing apparatus transmits determined information to the wireless transceiver that is connected to the information providing apparatus and exists outside the information providing apparatus.

In step 830, the information providing apparatus inserts the transmitted information into ID information of the wireless transceiver. After the transmitted information is inserted, the wireless transceiver transmits the ID information having the information inserted therein to an external source.

FIG. 9 is a flowchart illustrating a method of providing information performed by a wireless transceiver that exists outside the information providing apparatus, according to an arrangement that does not constitute an embodiment of the present invention.

In the embodiment of FIG. 9, the wireless transceiver and the content-related information are the same as those of the embodiment of FIG. 2. Referring to FIG. 9, in step 910, the wireless transceiver receives the content-related information, i.e., tag information, from an external source, i.e., the information providing apparatus. In step 920, the wireless transceiver inserts the tag information into ID information of the wireless transceiver. In step 930, the wireless transceiver transmits the ID information having the tag information inserted therein to the external source or other external sources.

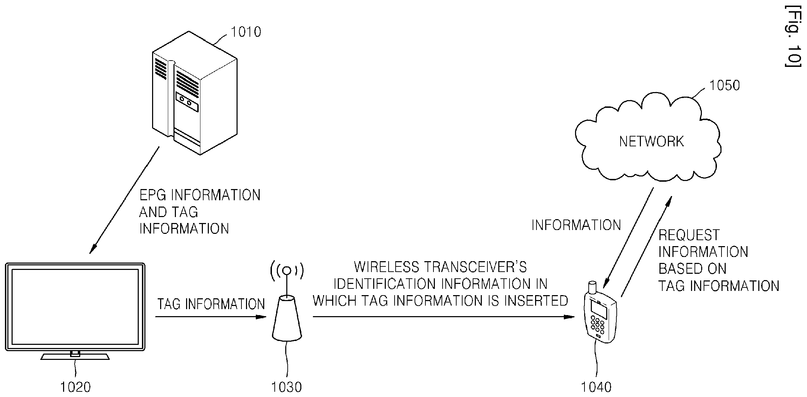

FIG. 10 is a diagram illustrating a scenario according to a method of providing information, according to an arrangement that does not constitute an embodiment of the present invention.

Referring to FIG. 10, a server 1010 transmits EPG information and/or tag information to a display 1020 (e.g., a digital television) having an information providing apparatus mounted therein, wherein the information is obtained by classifying a plurality of pieces of contents related to details of broadcasting programs according to a broadcasting time schedule. If the display 1020 receives only the EPG information, the display 1020 extracts tag information from the EPG information. The display 1020 transmits the tag information to a wireless transceiver 1030 that is externally located. The display 1020 inserts the tag information into ID information of the wireless transceiver 1030, and transmits this to a user terminal 1040. Alternatively, according to another embodiment of the present invention, the wireless transceiver 1030 may directly insert the tag information into the ID information of the wireless transceiver 1030 and may transmit the ID information to the user terminal 1040. The user terminal 1040 may extract the tag information from the ID information and may display the tag information. Also, the user terminal 1040 may request a network 1050 for information based on the tag information, and may receive the requested information from the network 1050. Detailed operations performed by the user terminal 1040 are described in detail herein below.

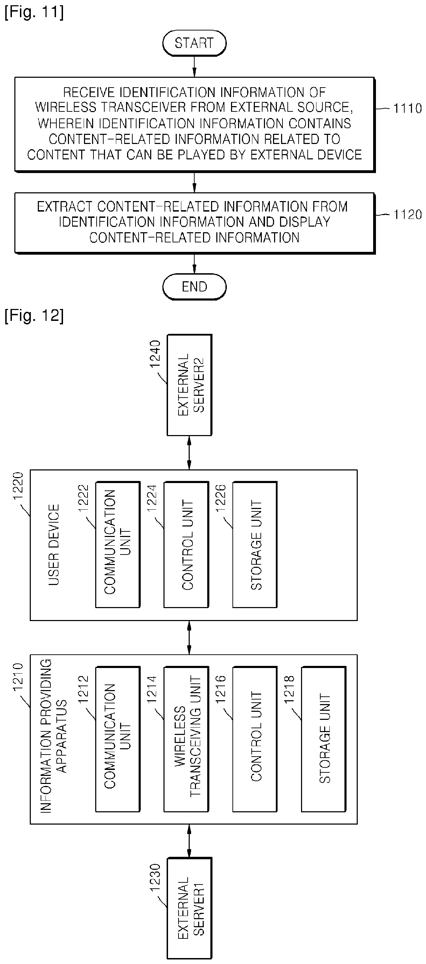

FIG. 11 is a flowchart illustrating a method of providing information, according to another embodiment of the present invention.

Referring to FIG. 11, in step 1110, an information providing apparatus receives ID information of a wireless transceiver from an external device, wherein the ID information contains content-related information regarding content that may be played by an external source. The information providing apparatus according to the method of FIG. 11 is not the same as the information providing apparatus according to the method of FIG. 2, but instead corresponds to the user terminal in the embodiment of FIG. 2. The content-related information, the wireless transceiver, and the ID information of the wireless transceiver are the same as those described with reference to FIG. 2.

In step 1120, the information providing apparatus extracts the content-related information from the ID information and then displays the extracted information. The information providing apparatus may also request a network for information related to the content-related information according to the extracted content-related information, and may receive and display the information. The information providing apparatus may also map the content-related information to an Internet address, may receive related information via the Internet based on the Internet address, and may display the related information. When a plurality of pieces of the content-related information exist, the information providing apparatus may set a priority order according to a predetermined standard, e.g., user preference, and may display the plurality of pieces of content-related information according to the predetermined standard.

FIG. 12 is a block diagram illustrating an information providing apparatus, according to an embodiment of the present invention.

Referring to FIG. 12, an information providing apparatus 1210 includes a communication unit 1212, a wireless transceiving unit 1214, a control unit 1216, and a storage unit 1218, and a user device 1220 includes a communication unit 1222, a control unit 1224, and a storage unit 1226. The information providing apparatus 1210 is connected to an external server1 1230, and the user device 1220 is connected to an external server2 1240.

The control unit 1216 of the information providing apparatus 1210 determines content-related information corresponding to content that may be played by a device including the information providing apparatus 1210. The content-related information is information related to details of content and is separate from the content itself. For example, the content-related information may be information about one or more characters in the content that is being played. According to embodiments of the present invention, the content-related information may be formed as tag information, and the tag information may be formed of a string or a byte-code. An example of a structure of such tag information is shown in FIG. 3. The control unit 1216 of the information providing apparatus 1210 determines the content-related information according to playback time information of the content. The control unit 1216 of the information providing apparatus 1210 analyzes whether the content-related information is related to a specific playback time (e.g., elapsed time of 30 minutes after playback of the content has started) of the content, and if related, the control unit 1216 determines that the content-related information corresponds to a content playback time, and matches that the content-related information with the content. According to embodiments of the present invention, the content may indicate content that is currently being played. If a plurality of pieces of content-related information exist, the control unit 1216 of the information providing apparatus 1210 may set a priority order according to a preference of a user of the information providing apparatus 1210, and may determine the content-related information from among the plurality of pieces of content-related information.

The content-related information may be received from the external server1 1230 or may be generated by the information providing apparatus 1210. When the control unit 1216 of the information providing apparatus 1210 generates the content-related information, the communication unit 1212 of the information providing apparatus 1210 receives EPG information about broadcasting programs from the external server 1 1230. The EPG information includes information obtained by classifying a plurality of pieces of contents related to details of the broadcasting programs according to a broadcasting time schedule. The control unit 1216 of the information providing apparatus 1210 initially stores the EPG information in the storage unit 1218 of the information providing apparatus 1210. After the EPG information is stored, the control unit 1216 of the information providing apparatus 1210 extracts the information from the EPG information, wherein the information is obtained by classifying the plurality of pieces of contents related to the details of the broadcasting programs according to the broadcasting time schedule, and the control unit 1216 of the information providing apparatus 1210 generates the content-related information based on the extracted information.

The control unit 1216 of the information providing apparatus 1210 inserts the content-related information into ID information of the wireless transceiving unit 1214. According to another embodiment of the present invention, if the wireless transceiving unit 1214 has a control unit (not shown), the wireless transceiving unit 1214 may directly insert the content-related information into the ID information. According to embodiments of the present invention, the wireless transceiving unit 1214 may be an AP, and/or the ID information may be an SSID. However, embodiments of the present invention are not limited to using the AP and./or the SSID. After content-related information is inserted into the ID information, the communication unit 1212 of the information providing apparatus 1210 transmits the ID information to the user device 1220.

The communication unit 1222 of the user device 1220 receives the ID information of the wireless transceiving unit 1214 from the information providing apparatus 1210, wherein the ID information contains the content-related information related to the content that may be played. The control unit 1224 of the user device 1220 extracts the content-related information from the ID information and then displays the content-related information on a display unit (not shown). The control unit 1224 of the user device 1220 may also request the external server2 1240 for information related to the content-related information according to the extracted content-related information, and may receive and display the requested information. Alternatively, the control unit 1224 of the user device 1220 may map the content-related information to an Internet address, and the communication unit 1222 of the user device 1220 may receive related information via the Internet based on the Internet address and may display the related information. When a plurality of pieces of the content-related information exist, the control unit 1224 of the user device 1220 may set a priority order according to a predetermined standard, e.g., user preference, and may display the plurality of pieces of content-related information according to the predetermined standard.

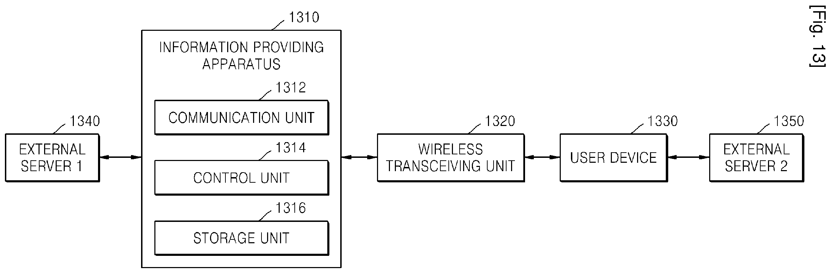

FIG. 13 is a block diagram illustrating an information providing apparatus, according to an arrangement that does not constitute an embodiment of the present invention.

Referring to FIG. 13, an information providing apparatus 1310 may include a communication unit 1312, a control unit 1314, and a storage unit 1316, and is connected to a wireless transceiver 1320 that is externally located. A user device 1330, an external server1 1340, and an external server2 1350 perform the same functions as those of the user device 1220, the external server1 1230, and the external server2 1240, and thus further detailed descriptions thereof are omitted for clarity and conciseness. In contrast to the example according to FIG. 12, the information providing apparatus 1310 of FIG. 13 does not include a wireless transceiving unit, and the wireless transceiver 1320 is externally located. In the embodiment of the present invention according to FIG. 13, the wireless transceiver 1320 and content-related information are the same as those of the embodiment according to FIG. 12.

The control unit 1314 of the information providing apparatus 1310 determines content-related information corresponding to content that may be played by a device including the information providing apparatus 1310. After the determination of the content-related information, the communication unit 1312 of the information providing apparatus 1310 transmits the content-related information to the wireless transceiver 1320. The control unit 1314 of the information providing apparatus 1310 inserts the content-related information into ID information of the wireless transceiver 1320. According to another embodiment of the present invention, if the wireless transceiver 1320 has a control unit (not shown), the wireless transceiver 1320 may directly insert the content-related information into the ID information. After insertion of the content-related information into the ID information, the wireless transceiver 1320 transmits the ID information to the user device 1330.

Embodiments of the present invention may include computer readable codes on a computer readable recording medium. A computer readable recording medium may include any data storage device that can store data that can be thereafter read by a computer system. Examples of such computer readable recording medium include Read-Only Memory (ROM), Random-Access Memory (RAM), Compact Disc (CD)-ROMs, magnetic tapes, floppy disks, optical data storage devices, etc. Such computer readable recording mediums can also be distributed over network coupled computer systems so that the computer readable code is stored and executed in a distributed fashion. Functional programs, codes, and code segments for accomplishing the present invention can also be easily construed by programmers of ordinary skill in the art to which the present invention pertains.

While the present invention has been particularly shown and described with reference to embodiments thereof, it will be understood by those of ordinary skill in the art that various changes in form and details may be made therein without departing from the scope of the present invention as defined by the following claims.

## Claims

1. A method of providing information to an external user device (730; 1220) by a display device, the method comprising:
determining, by the display device, a tag information to be transmitted to the external user device, based on a current playback time, among a plurality of tag information related to a content that is currently being played on the display device, wherein the tag information is information related to one or more characters in the content and is separate from the content itself, the plurality of tag information of the content being classified according to a playback time information of the content;
inserting, by the display device, the determined tag information of the content into Identification, ID, information of a wireless transceiver (1214), wherein the wireless transceiver is included in the display device; and
transmitting, by the display device, the ID information in which the determined tag information is inserted, to the external user device (730; 1220),
wherein the tag information is extracted by the external user device from the ID information which is transmitted from the display device and the extracted tag information is displayed on the external user device.

2. The method of claim 1, wherein determining of the tag information comprises setting a priority order according to a predetermined standard and determining the tag information according to the priority order.

3. The method of claim 2, wherein the predetermined standard contains a user preference corresponding to a user of the external user device (730; 1220).

4. The method of claim 1, further comprising receiving the tag information from an external source (710; 1230).

5. The method of claim 1, further comprising:
receiving broadcasting program information; and
extracting the tag information from the broadcasting program information.

6. The method of claim 5, wherein the tag information includes tag information obtained by classifying a plurality of pieces of contents related to the broadcasting program information according to a broadcasting time schedule.

7. The method of claim 1, wherein the wireless transceiver is an Access Point, AP, and the ID information includes a Service Set Identifier, SSID.

8. A display device comprising:
a wireless transceiver (1214);
a communication unit (1212); and
a control unit (1216) configured for:
determining a tag information to be transmitted to an external user device, based on a current playback time, among a plurality of tag information related to a content that is currently being played on the display device, wherein the tag information is information related to one or more characters in the content and is separate from the content itself, the plurality of tag information of the content being classified according to a playback time information of the content;
inserting the determined tag information into Identification, ID, information of the wireless transceiver (1214); and
transmitting, via the communication unit (1212), the ID information in which the determined tag information is inserted to the external user device (730; 1220) via the wireless transceiver (1214),
wherein the tag information is extractable by the external user device from the ID information which is transmitted from the display device and the extracted tag information is displayable on the external user device.

9. The display device of claim 8, wherein the control unit (1216) sets a priority order according to a predetermined standard and determines the content-related information according to the priority order.

10. The display device of claim 9, wherein the predetermined standard contains a user preference of a user of the user device (730; 1220).

11. The display device of claim 8, wherein the communication unit (1212) receives the tag information from an external source (710; 1230).

## Patentansprüche

1. Verfahren zum Bereitstellen von Information an eine externe Benutzervorrichtung (730; 1220) durch eine Anzeigevorrichtung, wobei das Verfahren Folgendes umfasst:
Ermitteln, durch die Anzeigevorrichtung, einer Tag-Information, die an die externe Benutzervorrichtung übertragen werden soll, basierend auf eine aktuellen Wiedergabezeit, unter einer Vielzahl von Tag-Informationen im Zusammenhang mit einem Inhalt, der aktuell an der Anzeigevorrichtung gespielt wird, wobei die Tag-Information Information im Zusammenhang mit einem oder mehreren Zeichen
im Inhalt ist und getrennt vom eigentlichen Inhalt ist, wobei die Vielzahl von Tag-Informationen des Inhalts gemäß einer Wiedergabezeit-Information des Inhalts klassifiziert werden;
Einbringen, durch die Anzeigevorrichtung, der ermittelten Tag-Information des Inhalts in Identifizierungs, ID, -Information eines drahtlosen Transceivers (1214), wobei der drahtlose Transceiver in der Anzeigevorrichtung umfasst ist; und
Übertragen, durch die Anzeigevorrichtung, der ID-Information, in der die ermittelte Tag-Information eingebracht ist, an die externe Benutzervorrichtung (730; 1220),
wobei die Tag-Information durch die externe Benutzervorrichtung aus der ID-Information, die von der Anzeigevorrichtung übertragen wird, entnommen wird und die entnommene Tag-Information an der externen Benutzervorrichtung angezeigt wird.

2. Verfahren nach Anspruch 1, wobei das Ermitteln der Tag-Information das Setzen eine Prioritätsreihenfolge gemäß einem vorbestimmten Standard und das Ermitteln der Tag-Information gemäß der Prioritätsreihenfolge umfasst.

3. Verfahren nach Anspruch 2, wobei der vorbestimmte Standard eine Benutzervorgabe enthält, die einem Benutzer der externen Benutzervorrichtung (730; 1220) entspricht.

4. Verfahren nach Anspruch 1, ferner umfassend das Empfangen der Tag-Information von einer externen Quelle (710; 1230).

5. Verfahren nach Anspruch 1, ferner umfassend:
Empfangen von Rundfunkprogramm-Information, und
Entnehmen der Tag-Information aus der Rundfunkprogramm-Information.

6. Verfahren nach Anspruch 5, wobei die Tag-Information Tag-Information umfasst, die durch Klassifizieren einer Vielzahl von Inhaltselementen im Zusammenhang mit der Rundfunkprogramm-Information gemäß einem Rundfunk-Zeitplan erhalten wird.

7. Verfahren nach Anspruch 1, wobei der drahtlose Transceiver ein Zugangspunkt, AP, ist und die ID-Information einen Service Set Identifier, SSID, umfasst.

8. Anzeigevorrichtung, umfassend:
einen drahtlosen Transceiver (1214);
eine Kommunikationseinheit (1212); und
eine Steuereinheit (1216), die konfiguriert ist zum:
Ermitteln einer Tag-Information, die an die externe Benutzervorrichtung gesendet werden soll, basierend auf eine aktuellen Wiedergabezeit, unter einer Vielzahl von Tag-Informationen im Zusammenhang mit einem Inhalt, der aktuell an der Anzeigevorrichtung gespielt wird, wobei die Tag-Information Information im Zusammenhang mit einem oder mehreren Zeichen im Inhalt ist und getrennt vom eigentlichen Inhalt ist, wobei die Vielzahl von Tag-Informationen des Inhalts gemäß einer Wiedergabezeit-Information des Inhalts klassifiziert werden;
Einbringen der ermittelten Tag-Information in Identifizierungs, ID, -Information des drahtlosen Transceivers (1214); und
Übertragen, über die Kommunikationseinheit (1212), der ID-Information, in der die ermittelte Tag-Information eingebracht ist, an die externe Benutzervorrichtung (730; 1220) über den drahtlosen Transceiver (1214),
wobei die Tag-Information durch die externe Benutzervorrichtung aus der ID-Information, die von der Anzeigevorrichtung übertragen wird, entnehmbar ist und die entnommene Tag-Information an der externen Benutzervorrichtung anzeigbar ist.

9. Anzeigevorrichtung nach Anspruch 8, wobei die Steuereinheit (1216) eine Prioritätsreihenfolge gemäß einem vorbestimmten Standard setzt und die inhaltsbezogene Information gemäß der Prioritätsreihenfolge ermittelt.

10. Anzeigevorrichtung nach Anspruch 9, wobei der vorbestimmte Standard eine Benutzervorgabe eines Benutzers der externen Benutzervorrichtung (730; 1220) enthält.

11. Anzeigevorrichtung nach Anspruch 8, wobei die Kommunikationseinheit (1212) die Tag-Information von einer externen Quelle (710; 1230) empfängt.

## Revendications

1. Procédé de délivrance d'informations à un dispositif d'utilisateur externe (730 ; 1220) par un dispositif d'affichage, le procédé comprenant :
la détermination, par le dispositif d'affichage, d'informations de balise devant être transmises au dispositif d'utilisateur externe, sur la base d'un temps de lecture en cours, parmi une pluralité d'informations de balise associées à un contenu qui est actuellement en cours d'affichage sur le dispositif d'affichage, dans lequel les informations de balise sont des informations associées à un ou plusieurs caractères dans le contenu et sont séparées du contenu en lui-même, la pluralité d'informations de balise du contenu étant classifiées en fonction d'informations de temps de lecture du contenu ;
l'insertion, par le dispositif d'affichage, des informations de balise déterminées du contenu en informations d'identification, ID, d'un émetteur-récepteur sans fil (1214), dans lequel l'émetteur-récepteur sans fil est inclus dans le dispositif d'affichage ; et
la transmission, par le dispositif d'affichage, des informations ID dans lesquelles les informations de balise déterminées sont insérées, au dispositif d'utilisateur externe (730 ; 1220),
dans lequel les informations de balise sont extraites par le dispositif d'utilisateur externe depuis les informations ID qui sont transmises depuis le dispositif d'affichage et les informations de balise extraites sont affichées sur le dispositif d'utilisateur externe.

2. Procédé selon la revendication 1, dans lequel la détermination des informations de balise comprend la configuration d'un ordre de priorité en fonction d'une norme prédéterminée et la détermination des informations de balise en fonction de l'ordre de priorité.

3. Procédé selon la revendication 2, dans lequel la norme prédéterminée contient une préférence utilisateur correspondant à un utilisateur du dispositif d'utilisateur externe (730 ; 1220).

4. Procédé selon la revendication 1, comprenant en outre la réception des informations de balise depuis une source externe (710 ; 1230).

5. Procédé selon la revendication 1, comprenant en outre : la réception d'informations de programme de diffusion ; et
l'extraction des informations de balise depuis les informations de programme de diffusion.

6. Procédé selon la revendication 5, dans lequel les informations de balise incluent des informations de balise obtenues en classifiant une pluralité d'éléments de contenu associés aux informations de programme de diffusion en fonction d'un planning de diffusion.

7. Procédé selon la revendication 1, dans lequel l'émetteur-récepteur sans fil est un point d'accès, AP, et les informations ID incluent un identifiant de réseau sans fil, SSID.

8. Dispositif d'affichage comprenant : un émetteur-récepteur sans fil (1214) ;
une unité de communication (1212) ; et une unité de commande (1216) configurée pour :
déterminer des informations de balise devant être transmises à un dispositif d'utilisateur externe, sur la base d'un temps de lecture en cours, parmi une pluralité d'informations de balise associées à du contenu qui est actuellement en cours d'affichage sur le dispositif d'affichage, dans lequel les informations de balise sont des informations associées à un ou plusieurs caractères
dans le contenu et sont séparées du contenu en lui-même, la pluralité d'informations de balise du contenu étant classifiées en fonction d'informations de temps de lecture du contenu ;
insérer les informations de balise déterminées dans des informations d'identification, ID, de l'émetteur-récepteur sans fil (1214) ; et
transmettre, via l'unité de communication (1212), les informations ID dans lesquelles les informations de balise déterminées sont insérées, au dispositif d'utilisateur externe (730 ; 1220) via l'émetteur-récepteur sans fil (1214),
dans lequel les informations de balise sont extractibles par le dispositif d'utilisateur externe depuis les informations ID qui sont transmises depuis le dispositif d'affichage et les informations de balise extraites sont affichables sur le dispositif d'utilisateur externe.

9. Dispositif d'affichage selon la revendication 8, dans lequel l'unité de commande (1216) configure un ordre de priorité en fonction d'une norme prédéterminée et détermine les informations associées au contenu en fonction de l'ordre de priorité.

10. Dispositif d'affichage selon la revendication 9, dans lequel la norme prédéterminée contient une préférence utilisateur d'un utilisateur du dispositif d'utilisateur (730 ; 1220).

11. Dispositif d'affichage selon la revendication 8, dans lequel l'unité de communication (1212) reçoit les informations de balise depuis une source externe (710 ; 1230).
